# DEMANDE DE BREVET EUROPEEN

(11) **EP 2 380 781 A1**
(43) Date de publication de la demande: **26.10.2011**
(21) Numéro de dépôt: 11305479.5
(22) Date de dépôt: 21.04.2011
(51) Int. Cl.: B60R 19/18

(54) **Ensemble d'absorption d'énergie de pare-chocs arrière de véhicule automobile**

(30) Priorité: 23.04.2010 FR 1053117
(71) Demandeur: Faurecia Bloc Avant, 92000 Nanterre (FR)
(72) Inventeur: Borde, Patrick, 25200, MONTBELIARD (FR)
(74) Mandataire: Domenego, Bertrand

(57) **Abrégé**

L'ensemble d'absorption (10) comporte une poutre (12) en matière plastique, comprenant une traverse (14) s'étendant dans une première direction (Y) entre deux éléments latéraux d'absorption (16), solidaires de ladite traverse (14), les éléments latéraux d'absorption (16) présentant une dimension supérieure à celle de la traverse (14) dans une deuxième direction (X) perpendiculaire à la première (Y), de sorte que la poutre (12) présente une forme générale en U. Il comporte deux éléments métalliques de renfort (20), comprenant chacun une platine latérale d'appui (22), contre laquelle l'un des éléments latéraux d'absorption (16) respectif est agencé en appui, une partie de renfort (24), agencée en appui contre la traverse (14), et un bras de liaison (26), s'étendant entre la platine latérale d'appui (22) et la partie de renfort (24).

## Description

La présente invention concerne un ensemble d'absorption d'énergie pour un pare-chocs arrière de véhicule automobile.

Un ensemble d'absorption d'énergie pour pare-chocs arrière de véhicule automobile est généralement destiné à absorber des chocs à faible vitesse, notamment inférieure à 10 km/h.

Toutefois, contrairement à un pare-chocs avant de véhicule automobile, un pare-chocs arrière n'est pas tenu d'absorber des chocs à haute vitesse, c'est-à-dire pour une vitesse comprise entre 55 et 65 km/h. De ce fait, la masse d'un ensemble d'absorption arrière est plus faible que celle d'un ensemble d'absorption avant, dans un souci d'allègement du véhicule automobile.

Ainsi, il est possible de prévoir un ensemble d'absorption pour pare-chocs arrière de véhicule automobile, du type comportant une poutre en matière plastique, comprenant une traverse s'étendant dans une première direction entre deux éléments latéraux d'absorption, solidaires de ladite traverse, les éléments latéraux présentant une dimension supérieure à celle de la traverse dans une deuxième direction perpendiculaire à la première, de sorte que la poutre présente une forme générale en U.

Une telle poutre de pare-chocs en matière plastique est suffisante pour assurer les fonctions d'absorption exigées pour une poutre arrière, tout en présentant une masse relativement faible.

Les éléments latéraux d'absorption, également appelés « crash box », permettent d'absorber les chocs, notamment sur les parties latérales du pare-chocs arrière. En particulier, les éléments latéraux d'absorption sont notamment adaptés pour absorber l'énergie d'un choc réparabilité à une vitesse de 15 km/h contre un mur incliné de 10° par rapport à un plan perpendiculaire à une direction longitudinale du véhicule automobile.

Toutefois, l'absorption d'un choc sur une partie centrale de la poutre, à une vitesse de 10 km/h, tel que par exemple un choc test RCAR, est parfois insuffisante.

L'invention a notamment pour but de remédier à cet inconvénient, en fournissant un ensemble d'absorption pour pare-chocs arrière susceptible d'absorber de manière suffisante un choc centré à 10 km/h, tout en conservant une masse relativement réduite pour l'ensemble d'absorption.

A cet effet, l'invention a notamment pour objet un ensemble d'absorption d'énergie de pare-chocs arrière de véhicule automobile, du type comportant une poutre en matière plastique, comprenant une traverse s'étendant dans une première direction entre deux éléments latéraux d'absorption, solidaires de ladite traverse, les éléments latéraux d'absorption présentant une dimension supérieure à celle de la traverse dans une deuxième direction perpendiculaire à la première, de sorte que la poutre présente une forme générale en U, caractérisée en ce qu'il comporte deux éléments métalliques de renfort, comprenant chacun une platine latérale d'appui, contre laquelle l'un des éléments latéraux d'absorption respectif est agencé en appui, une partie de renfort, agencée en appui contre la traverse, et un bras de liaison, s'étendant entre la platine latérale d'appui et la partie de renfort.

La partie de renfort de chaque élément métallique vient s'appuyer sur la partie centrale de la traverse plastique, formant un appui pour la déformation en compression de cette poutre vers cet appui. Chaque élément métallique de renfort permet donc d'améliorer le comportement en absorption de la poutre en matière plastique.

En outre, les platines d'appui forment des surfaces d'appui pour les éléments latéraux d'absorption, ce qui améliore également leur comportement en absorption.

Un ensemble d'absorption selon l'invention peut en outre comporter l'une ou plusieurs des caractéristiques suivantes, prises seules ou selon toutes les combinaisons techniquement possibles.
- L'ensemble d'absorption comporte un élément de fixation d'un anneau de remorquage, solidarisé avec l'élément de renfort métallique.
- L'élément de fixation d'un anneau de remorquage est fixé sur la platine d'appui, par exemple par soudage.
- L'élément de fixation comporte une douille, de forme générale tubulaire comprenant une paroi intérieure filetée, dans laquelle l'anneau de remorquage est destiné à être vissé.
- La traverse comporte un réseau de nervures d'absorption.
- La traverse est venue de matière avec les éléments latéraux d'absorption.
- Au moins un élément latéral d'absorption comporte un réseau de nervures, délimitant des cellules s'étendant selon la deuxième direction, chaque cellule étant ouverte à une extrémité et fermée à l'autre extrémité, les extrémités ouvertes et fermées des cellules adjacentes formant un damier.

L'invention concerne également un véhicule automobile, comportant un châssis comprenant une partie structurelle arrière, caractérisé en ce qu'il comporte un ensemble d'absorption tel que défini précédemment, la platine latérale d'appui de chaque élément métallique de renfort étant solidarisée sur la partie arrière du châssis.

L'invention sera mieux comprise à la lecture de la description qui va suivre, donnée uniquement à titre d'exemple et faite en se référant aux figures annexées dans lesquelles :
- la figure 1 est une vue du dessus d'un ensemble d'absorption pour pare-chocs arrière selon un premier exemple de mode de réalisation de l'invention ;
- la figure 2 est une vue partielle de face d'un élément latéral d'absorption équipant l'ensemble de la figure 1 ;
- la figure 3 est une vue similaire à la figure 1 d'un ensemble d'absorption selon un deuxième exemple de mode de réalisation de l'invention.

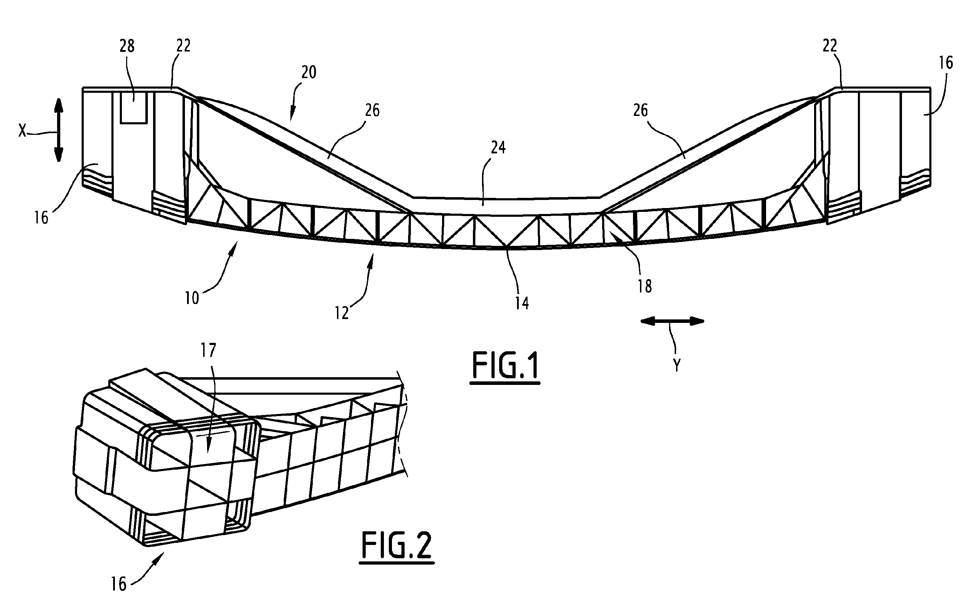

On a représenté sur la figure 1 un ensemble d'absorption d'énergie 10 de pare-chocs arrière de véhicule automobile. Un tel ensemble d'absorption 10 est destiné à être solidarisé sur une partie structurelle arrière d'un châssis du véhicule automobile.

L'ensemble 10 comporte une poutre 12 en matière plastique, comprenant une traverse 14 s'étendant dans une première direction Y entre deux éléments latéraux d'absorption d'énergie 16, également appelés « crash box », solidaires de la traverse 14. Les éléments latéraux 16 présentent une dimension supérieure à celle de la traverse dans une deuxième direction X perpendiculaire à la première Y, de sorte que la poutre 12 présente une forme générale en U.

Lorsque l'ensemble d'absorption 10 est rapporté sur le véhicule automobile, la première direction Y est une direction transversale du véhicule, et la deuxième direction X est une direction longitudinale de ce véhicule.

Dans ce qui suit, on appellera partie avant d'un élément, la partie de cet élément destinée à être tournée vers l'avant du véhicule automobile, et partie arrière d'un élément, la partie de cet élément destinée à être tournée vers l'arrière du véhicule automobile.

De préférence, chaque élément latéral d'absorption 16 comporte un réseau de nervures, délimitant des cellules 17 s'étendant selon la deuxième direction X, par exemple neuf cellules, disposées en damier, comme cela est représenté sur la figure 2. Chaque cellule est ouverte vers l'une de ses parties avant ou arrière, et fermée vers l'autre de ses parties avant ou arrière.

Conformément à l'exemple de la figure 2 (sur laquelle la partie arrière de l'ensemble d'absorption 10 est montrée), la cellule centrale est ouverte vers l'arrière et fermée vers l'avant, et les cellules encadrant la cellule centrale sur les côtés, le dessus et le dessous sont fermées vers l'arrière et ouvertes vers l'avant. Les cellules disposées en diagonale par rapport à la cellule centrale sont également ouvertes vers l'arrière et fermées vers l'avant.

On notera qu'un tel élément latéral d'absorption 16 permet une absorption d'énergie efficace. En particulier, les éléments latéraux d'absorption sont adaptés pour absorber l'énergie d'un choc réparabilité à une vitesse de 15 km/h contre un mur incliné à 10° par rapport à un plan perpendiculaire à la direction longitudinale X du véhicule automobile.

En outre, la disposition des cellules telle que précitée, telle que des cellules présentent une ouverture vers l'avant et d'autres vers l'arrière, permet un démoulage facile de l'élément latéral 16 lors de sa conception par moulage.

Avantageusement, la traverse 14 en matière plastique est venue de matière avec les éléments latéraux d'absorption 16, la poutre 12 étant par exemple moulée en une seule pièce. En variante, les éléments latéraux d'absorption 16 pourraient être rapportés, par exemple par collage, sur la traverse 14.

Afin d'assurer efficacement une fonction d'absorption des chocs à l'arrière du véhicule automobile, la traverse 14 comporte de manière classique un réseau de nervures 18 d'absorption.

Ces chocs arrière sont absorbés de manière optimale par la traverse 14 à l'aide d'un élément métallique de renfort 20.

L'élément métallique de renfort 20 comporte deux platines latérales d'appui 22, fixées aux éléments latéraux d'absorption 16, de sorte que la partie arrière de chaque élément latéral d'absorption 16 est agencée en appui contre l'une de ses platines d'appui 22. Ainsi, chaque platine latérale 22 forme une surface d'appui pour un élément latéral d'absorption 16, qui soutient de manière optimale cet élément latéral d'absorption 16 lorsqu'il se déforme par compression en cas de choc.

Avantageusement, l'ensemble d'absorption 10 est solidarisé à la partie structurelle arrière du véhicule automobile par fixation des platines 22 sur cette partie structurelle arrière.

L'élément métallique de renfort 20 comporte également une partie centrale de renfort 24, agencée en appui sur la traverse 14, contre la partie avant de cette traverse 14. Cette partie centrale de renfort 24 forme alors une surface d'appui soutenant la traverse 14 lorsqu'elle se déforme par compression, dans la direction longitudinale du véhicule, en cas de choc.

Enfin, l'élément métallique de renfort comporte deux bras de liaison 26, s'étendant chacun, obliquement par rapport à la première direction Y, entre l'une des platines d'appui 22 respective et la partie centrale de renfort 24. Ces bras de liaison 26 permettent notamment de reporter les efforts reçus lors d'un choc vers les platines d'appui 22, donc vers la partie structurelle arrière du véhicule automobile.

On notera que, du fait de la forme en U de la poutre 12, chaque bras de liaison 26 est espacé de la traverse 14, et délimite, avec cette traverse 14 et l'élément latéral d'absorption 16 correspondant, un espace de forme générale triangulaire.

De préférence, chaque bras de liaison 26 s'étend dans une direction formant un angle de 10° avec un plan perpendiculaire à la direction longitudinale X du véhicule automobile. Ainsi, en cas de choc réparabilité contre un mur incliné de 10° par rapport à ce plan, dont l'énergie est destinée à être absorbée par un élément latéral d'absorption 16, le bras de liaison 26 relié à cet élément latéral d'absorption 16 est sensiblement parallèle au mur, et ne perturbe donc pas la déformation de l'élément latéral 16 lors du choc.

Avantageusement, l'ensemble d'absorption selon l'invention comporte un élément 28 de fixation d'un anneau de remorquage, solidarisé avec l'élément de renfort métallique 20. De préférence, cet élément de fixation 28 est fixé sur l'une des platines d'appui 22, par exemple par soudage.

Par exemple, l'élément de fixation 28 comporte une douille, de forme générale tubulaire, comprenant une paroi intérieure filetée dans laquelle un anneau de remorquage est destiné à être vissé.

Ainsi, l'élément métallique de renfort 20 permet d'intégrer facilement une fonction de fixation d'un anneau de remorquage, ce qui n'est pas possible avec un ensemble d'absorption classique de l'état de la technique.

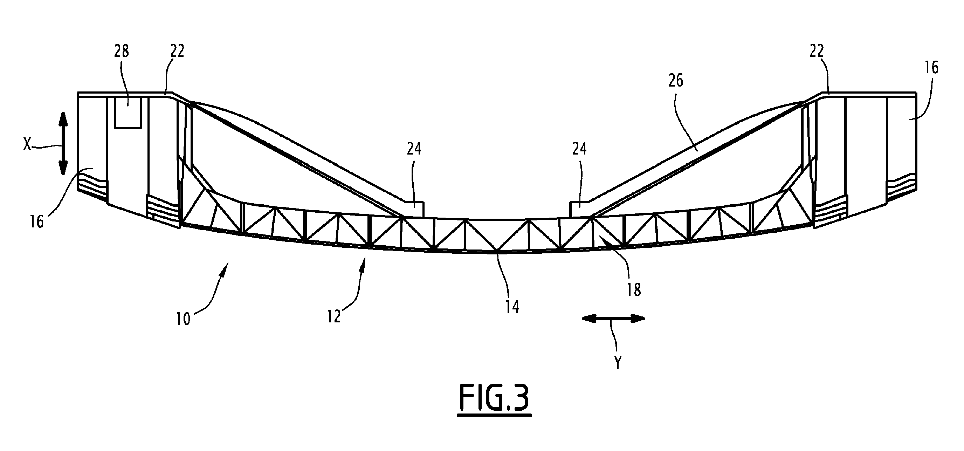

On a représenté sur la figure 3 un ensemble de fixation 10 selon un deuxième exemple de mode de réalisation de l'invention. Sur cette figure, les éléments analogues à ceux des figures précédentes sont désignés par des références identiques.

L'ensemble d'absorption 10 selon ce deuxième mode de réalisation diffère de celui du premier mode de réalisation en ce qu'il comporte deux éléments métalliques de renfort 20 séparés au lieu d'un seul.

Chaque élément métallique de renfort 20 comporte une platine d'appui 22 contre laquelle un élément latéral d'absorption 16 respectif est agencé en appui, une partie de renfort 24, agencée en appui contre la traverse, et un bras de liaison 26, s'étendant entre la platine d'appui et la partie de renfort.

De la même manière que dans le premier mode de réalisation, du fait de la forme en U de la poutre 12, chaque bras de liaison 26 est espacé de la traverse 14, et délimite, avec cette traverse 14 et l'élément latéral d'absorption 16 correspondant, un espace de forme générale triangulaire. De préférence, chaque bras de liaison 26 s'étend dans une direction formant un angle de 10° avec un plan perpendiculaire à la direction longitudinale X du véhicule automobile. Ainsi, en cas de choc réparabilité contre un mur incliné de 10° par rapport à ce plan, dont l'énergie est destinée à être absorbée par un élément latéral d'absorption 16, le bras de liaison 26 relié à cet élément latéral d'absorption 16 est sensiblement parallèle au mur, et ne perturbe donc pas la déformation de l'élément latéral 16 lors du choc.

Les deux éléments métalliques de renfort 20 sont agencés symétriquement l'un par rapport à l'autre par rapport à un plan longitudinal perpendiculaire à la direction transversale du véhicule automobile.

Conformément à ce deuxième mode de réalisation, les parties de renfort 24 forment une surface d'appui moins importante pour la traverse 14, mais présentent une masse plus faible que la partie de renfort centrale de l'ensemble d'absorption du premier mode de réalisation.

Les autres caractéristiques décrites précédemment en référence au premier mode de réalisation peuvent sont compatibles avec ce deuxième mode de réalisation.

En particulier, chaque élément latéral d'absorption 16 comporte par exemple un réseau de nervures du même type que celui défini précédemment.

Avantageusement, l'ensemble d'absorption selon l'invention comporte un élément 28 de fixation d'un anneau de remorquage, solidarisé avec l'élément de renfort métallique 20. De préférence, cet élément de fixation 28 est fixé sur l'une des platines d'appui 22, par exemple par soudage.

Par exemple, l'élément de fixation 28 comporte une douille, de forme générale tubulaire, comprenant une paroi intérieure filetée dans laquelle un anneau de remorquage est destiné à être vissé.

On notera que l'invention n'est pas limitée aux modes de réalisation précédemment décrits, mais pourrait présenter diverses variantes sans sortir du cadre des revendications.

## Revendications

1. Ensemble (10) d'absorption d'énergie de pare-chocs arrière de véhicule automobile, du type comportant une poutre (12) en matière plastique, comprenant une traverse (14) s'étendant dans une première direction (Y) entre deux éléments latéraux d'absorption (16), solidaires de ladite traverse (14), les éléments latéraux d'absorption (16) présentant une dimension supérieure à celle de la traverse (14) dans une deuxième direction (X) perpendiculaire à la première (Y), de sorte que la poutre (12) présente une forme générale en U, **caractérisée en ce qu'**il comporte deux éléments métalliques de renfort (20), comprenant chacun une platine latérale d'appui (22), contre laquelle l'un des éléments latéraux d'absorption (16) respectif est agencé en appui, une partie de renfort (24), agencée en appui contre la traverse (14), et un bras de liaison (26), s'étendant entre la platine latérale d'appui (22) et la partie de renfort (24).

2. Ensemble d'absorption (10) selon la revendication 1, comportant un élément (28) de fixation d'un anneau de remorquage, solidarisé avec l'élément de renfort métallique (20).

3. Ensemble d'absorption (10) selon la revendication 2, dans lequel l'élément (28) de fixation d'un anneau de remorquage est fixé sur la platine d'appui (22), par exemple par soudage.

4. Ensemble d'absorption (10) selon la revendication 2 ou 3, dans lequel l'élément de fixation (28) comporte une douille, de forme générale tubulaire comprenant une paroi intérieure filetée, dans laquelle l'anneau de remorquage est destiné à être vissé.

5. Ensemble d'absorption (10) selon l'une quelconque des revendications précédentes, dans lequel la traverse (14) comporte un réseau de nervures d'absorption.

6. Ensemble d'absorption (10) selon l'une quelconque des revendications précédentes, dans lequel la traverse (14) est venue de matière avec les éléments latéraux d'absorption (16).

7. Ensemble d'absorption (10) selon l'une quelconque des revendications précédentes, dans lequel au moins un élément latéral d'absorption (16) comporte un réseau de nervures, délimitant des cellules (17) s'étendant selon la deuxième direction (X), chaque cellule (17) étant ouverte à une extrémité et fermée à l'autre extrémité, les extrémités ouvertes et fermées des cellules (17) adjacentes formant un damier.

8. Véhicule automobile, comportant un châssis comprenant une partie structurelle arrière, **caractérisé en ce qu'**il comporte un ensemble d'absorption (10) selon l'une quelconque des revendications précédentes, la platine latérale d'appui (22) de chaque élément métallique de renfort (20) étant solidarisée sur la partie arrière du châssis.
